# EUROPÄISCHE PATENTSCHRIFT

(11) **EP 3 521 099 B1**
(45) Veröffentlichungstag und Bekanntmachung des Hinweises auf die Patenterteilung: **07.06.2023**
(21) Anmeldenummer: 18020552.8
(22) Anmeldetag: 24.10.2018
(51) Int. Cl.: H02J 3/32, H02J 7/34, B60L 53/14, B60L 53/31, B60L 53/53, B60L 53/67, B60L 53/63, H02J 7/00

(54) **LADESYSTEM MIT MINDESTENS EINER LADESÄULE FÜR ELEKTROFAHRZEUGE UND VERFAHREN ZUM LADEN EINES ODER MEHRERER ELEKTROFAHRZEUGE**
CHARGING SYSTEM WITH AT LEAST ONE CHARGING COLUMN FOR ELECTRIC VEHICLES AND METHOD FOR CHARGING ONE OR MORE ELECTRIC VEHICLES
SYSTÈME DE CHARGE DOTÉ D'AU MOINS UNE COLONNE DE CHARGE POUR VÉHICULES ÉLECTRIQUES ET PROCÉDÉ DE CHARGE D'UN OU D'UNE PLURALITÉ DE VÉHICULES ÉLECTRIQUES

(30) Priorität: 06.02.2018 DE 102018102566
(43) Veröffentlichungstag der Anmeldung: 07.08.2019
(73) Patentinhaber: Dr. Ing. h.c. F. Porsche AG, 70435 Stuttgart (DE)
(72) Erfinder: Heyne, Raoul, 75446 Wiernsheim (DE); Joslowski, Florian, 70771 Leinfelden-Echterdingen (DE)

(56) Entgegenhaltungen:
- WO-A1-2013/137232
- DE-A1-102013 200 949
- DE-A1-102015 110 023
- US-A1- 2008 067 974
- US-A1- 2012 200 256
- US-A1- 2017 274 792

## Beschreibung

Die vorliegende Erfindung betrifft ein Ladesystem mit einer Ladestation, einer ersten Ladesäule und einer zweiten Ladesäule zum Laden von Elektrofahrzeugen. Insbesondere ist das Ladesystem ein Ladesystem für elektrisch angetriebene PKWs.

Der Elektromobilität ist in den letzten Jahren eine immer größer werdende Bedeutung zugekommen. Um die Verbreitung von Elektrofahrzeugen voranzubringen, ist es wünschenswert, dass der Ladevorgang eines Elektrofahrzeuges schnell, unkompliziert und jederzeit möglich ist. Dabei ist es im Sinne einer guten Zugänglichkeit von Elektrotankstellen möglich, mehrere Fahrzeuge an einer Ladesäule mit mehreren Ladesteckern zu laden. Bei den Ladesäulen mit mehreren Ladesteckern wird eine Stromquelle zum Laden mehrerer Fahrzeuge verwendet. Die Leistung verteilt sich dann auf alle angeschlossenen Fahrzeuge. Dies verringert jedoch die Leistung, die pro Fahrzeug aufgebracht werden kann und verlängert die Ladezeiten der Elektrofahrzeuge.

Die meisten heutigen Ladesäulen sind so aufgebaut, dass sie eine Leistungselektronik enthalten und mit dieser ein bis drei Ladestecker bedienen. Wird mehr als eine Ladesäule bereitgestellt, so wird auch eine Leistungselektronik für jede Ladesäule vorgesehen. Die Leistungselektronik führt die Umformung des Stroms und der Spannung von einem Netzanschluss durch, so dass der Strom und die Spannung an den Ladesteckern die geeignete Form (DC oder AC) und Größe aufweist, um ein Elektrofahrzeug aufladen zu können (z.B. Gleichstrom in Höhe von 48 A).

Die europäische Anmeldung EP3035478 A1 beschreibt eine Ladestation zum Bereitstellen elektrischer Energie für ein elektrisch betreibbares Fahrzeug und eine Anordnung von mehreren Ladestationen, die an ein Versorgungsnetz angeschlossen sind. Die Anmeldung US2011/291616A betrifft ein Ladegerät, das eine Ladeanordnung mit einem Wechselstromterminal zum Zuführen des Wechselstroms, einem Gleichrichter zum Wandeln der Wechselspannung in eine Gleichspannung, und ein Gleichstromterminal zur Ausgabe des Gleichstroms aufweist.

Die Anmeldung US 2011/175569 A beschreibt einen Controller für eine Ladestation. Die Anmeldung US 2013/169227 A beschäftigt sich mit einer modularen Ladestation mit einem Controller und einem Schalter zum Ein- und Ausschalten der Energiezufuhr. Die Anmeldung US 2016/137082 A beschreibt einen Zusatzadapter, der es ermöglicht, an einem einzelnen Ladeanschluss zwei Elektrofahrzeuge simultan zu laden. Die Anmeldung US 2016/193932 A stellt einen Ladestation-Expander bereit, der elektrische Energie von einer Ladestation erhält und die elektrische Energie auf zumindest ein Elektrofahrzeug verteilt. In der US 2008/067 974 A1 wird ein Ladesystem mit Pufferspeichern beschrieben. Die WO 2013/137 232 A1 beschreibt ein weiteres Ladesystem mit Pufferspeichern.

Es ist Aufgabe der vorliegenden Erfindung, ein Ladesystem für Elektrofahrzeuge bereitzustellen, welches möglichst flexibel an verschiedene Ladeszenarien anpassbar ist bezüglich der Bereitstellung von Energie an und ihrer Aufteilung auf mehrere Ladesäulen.

Die Aufgabe wird mit einer Vorrichtung gemäß Patentanspruch 1 gelöst. Ausgestaltungen ergeben sich aus den abhängigen Patentansprüchen und der beiliegenden Beschreibung.

Erfindungsgemäß wird ein Ladesystem mit einer Ladestation, mindestens einer ersten Ladesäule, die einen oder mehrere Ladestecker aufweist, und einem Netzanschluss zum Bereitstellen von Energie an die Ladestation bereitgestellt. Das erfindungsgemäße Ladesystem weist eine zweite Ladesäule auf. Das Ladesystem umfasst ferner einen Pufferspeicher, insbesondere einen Pufferspeicher und einen Netzanschluss zum Bereitstellen von Energie an die Ladestation. Bei dem Pufferspeicher kann es sich um einen aufteilbaren Pufferspeicher handeln, welcher in einem Ladesystem mit zwei Ladesäulen bezüglich jeder der Ladesäulen individuell schaltbar ist oder zusammengeschaltet auf eine der Ladesäulen zusammen mit dem Netzanschluss geschaltet werden kann. Weiterhin weist das Ladesystem eine Schaltvorrichtung auf, wobei die Schaltvorrichtung eingerichtet ist, den Energiefluss aus dem Pufferspeicher und dem Netzanschluss zu der ersten oder zweiten Ladesäule zu leiten.

Durch die erfindungsgemäße Vorrichtung kann mindestens die erste oder zweite Ladesäule mit einem oder mehreren Ladesteckern des Ladesystems mit Energie versorgt werden. Insbesondere ermöglicht das Ladesystem bei Vorliegen von zwei Ladesäulen gemäß hierin beschriebenen Ausführungsformen, die Energiebereitstellung und die Energieaufteilung auf die Ladesäulen in mehreren Kombinationen auszuführen. Dabei kann das Ladesystem insbesondere durch den Pufferspeicher mit kleinen Netzleistungen geladen werden und große Leistungen zum Laden von Elektrofahrzeugen abgeben. Die erfindungsgemäße Anordnung mit Pufferspeicher und Schaltvorrichtung erlaubt es, die maximal bereitstellbare Energie an einer Ladesäule oder an jeweils einer von zwei Ladesäulen zur Verfügung zu stellen.

Gemäß der Erfindung weist das Ladesystem eine zweite Ladesäule mit einen oder mehreren Ladesteckern auf. Im Allgemeinen kann das hier beschriebene Ladesystem auch mehr als zwei Ladesäulen aufweisen. Im Rahmen der vorliegenden Beschreibung kann das hier vorgestellte Ladesystem mit zwei Ladesäulen für ein System mit mehr als zwei Ladesäulen (beispielsweise drei, vier, fünf oder mehr Ladesäulen) repräsentativ sein. Insbesondere ist die Schaltvorrichtung eingerichtet, den Energiefluss aus dem Pufferspeicher und dem Netzanschluss auf die beiden Ladesäulen zu verteilen oder ihn zu einer der beiden Ladesäulen zu leiten. In einem Ladeszenario kann die Energie zum Laden des mindestens einen Elektrofahrzeugs primär aus dem Netzanschluss bezogen werden und der Pufferspeicher kann verwendet werden, um eine möglicherweise entstehende Energielücke zu schließen. Durch einen größtenteils aus dem Netzanschluss stattfindenden Energiefluss kann der Pufferspeicher geschont werden, da er so weniger oft Entlade- und Ladevorgängen ausgesetzt ist.

Gemäß hierin beschriebenen Ausführungsformen kann der Pufferspeicher durch eine Batterieaufteilung auf die einzelnen Säulen verteilt sein, so dass der Strom nicht zwischen den Ladepunkten aufgeteilt werden muss, sondern für jeden Ladepunkt in voller Höhe bereitgestellt werden kann. Für die flexible Bereitstellung der Energie an zwei Ladesäulen kann der Energiefluss aus dem Pufferspeicher sowohl auf die zwei Ladesäulen aufgeteilt werden (bei gleichzeitigem Laden an beiden Ladesäulen), als auch zusammengeführt werden (beim Laden an nur einer Ladesäule). Dadurch erhöht sich die Flexibilität des Ladesystems für verschiedene Situationen, so dass insbesondere die Ladezeit für den Kunden gesenkt werden kann, wodurch die Akzeptanz der Elektromobilität erhöht wird.

Das erfindungsgemäße Ladesystem umfasst einen Netzanschluss, insbesondere einen Netzanschluss zum Laden des Pufferspeichers. Durch den Netzanschluss kann der Pufferspeicher geladen werden, wobei der Netzanschluss für kleine Leistungen ausgelegt werden kann, beispielsweise Leistungen im Bereich von ca. 10 kW bis 300 kW. Aufgrund der Tatsache, dass bei dem erfindungsgemäßen Ladesystem ein Netzanschluss mit kleiner Leistung genügt, was die Anforderungen an einen potentiellen Aufstellungsort des Ladesystems verringert, ist das Ladesystem gemäß hierin beschriebenen Ausführungsformen flexibel einsetzbar und kann zur weiteren Verbreitung der Elektromobilität beitragen.

Gemäß einer Ausführungsform weist der Pufferspeicher eine Batterie auf. Insbesondere kann der Pufferspeicher eine wiederaufladbare Batterie aufweisen. Alternativ oder zusätzlich ist der erfindungsgemäße Pufferspeicher auf je eine Batterie bzw. Batterieeinheit für jede Ladesäule aufgeteilt. Dabei ist typischerweise je eine Batterie bzw. Batterieeinheit mit einer Ladesäule assoziiert. Die Gestaltung des Pufferspeichers als Batterie und die Aufteilung auf je eine Einheit pro Ladesäule ermöglicht es, verschiedene Schaltersituationen zu realisieren und so eine große Flexibilität beim Ladevorgang an den beiden Ladesäulen zu erreichen. So kann eine flexible Schaltung des Pufferspeichers und eine situationsgemäße Verteilung der Energie auf die Ladesäulen einfach realisiert werden. Gemäß hierin beschriebenen Ausführungsformen kann eine Batterie, die mit einer Ladesäule assoziiert ist, dieser Ladesäule zugeordnet oder zugewiesen sein (insbesondere schaltbar zugeordnet oder zugewiesen) und/oder sich in dieser Ladesäule befinden. In einer Ausführungsform kann eine Batterie zwar einer Ladesäule zugeordnet oder zugewiesen sein, aber sich in der Ladestation, insbesondere außerhalb der Ladesäule, befinden. Typischerweise kann eine Assoziierung, wie sie hierin verwendet wird, eine 1:1 Zuordnung einer Batterie zu einer Ladesäule bedeuten, wobei sich die Batterien in der Ladestation oder in der jeweiligen Ladesäule befinden können.

Typischerweise kann der Pufferspeicher in den Ladesäulen des Ladesystems angeordnet sein. Insbesondere können die Batterien, bzw. Batterieeinheiten des Pufferspeichers in den Ladesäulen angeordnet sein. In anderen Ausführungsformen kann das Ladesystem aus zwei Einheiten bestehen: Einer Ladestation, die die Leistungselektronik und den Pufferspeicher enthält (und weitere Elemente, wie zum Beispiel die Kühlung), und die Ladesäulen mit den Ladesteckern. Dies fördert eine kompakte Bauweise der Ladesäulen. Dabei können die Ladesäulen auch entfernt von der Ladestation aufgestellt sein (zum Beispiel in einer Entfernung von einigen zehn bis zu einigen hundert Metern).

Gemäß der Erfindung ist die Schaltvorrichtung derart ausgebildet, dass die maximale Energie des Ladesystems an je einer der Ladesäulen bereitgestellt werden kann. Die Bereitstellung eines Pufferspeichers für die Ladesäulen, die Aufteilung des Pufferspeichers sowie das Zusammenschalten einzelner Teile bzw. Einheiten des Pufferspeichers ermöglicht eine gesteigerte und an die entsprechende Ladesituation optimal angepasste Ladeleistung an beiden Ladesäulen. Dadurch können die Ladezeiten an dem erfindungsgemäßen Ladesystem optimiert werden.

In einer weiteren Ausgestaltung der Erfindung können die beiden Ladesäulen durch zwei Leistungselektroniken bedient werden, wobei die Energie schon als Gleichstrom/Gleichspannung auf die Ladesäulen übertragen wird. Bevorzugt können die Leistungselektroniken in der Ladestation untergebracht sein. Zudem können die beiden Leistungselektroniken gleich sein. Die Leistungselektroniken erlauben es, die Ladesäulen flexibel anzusteuern. Insbesondere können die Ladesituationen der zwei Ladesäulen unabhängig voneinander bewertet und das Ladeschema darauf abgestimmt werden.

In einer Ausgestaltung des erfindungsgemäßen Ladesystems kann der Pufferspeicher eine erste Batterie (oder erste Batterieeinheit) für die erste Ladesäule und eine zweite Batterie (oder zweite Batterieeinheit) für die zweite Ladesäule aufweisen, wobei die erste Batterie mit der zweiten Ladesäule (und deren Ladesteckern) und die zweite Batterie mit der ersten Ladesäule (und deren Ladesteckern) koppelbar ist. Insbesondere erlaubt die Schaltvorrichtung eine solche Verbindung. Dadurch wird sowohl eine große Flexibilität erreicht, als auch ein bedarfsgemäßes Bereitstellen von Energie an die jeweilige Ladesäule. Typischerweise können die erste Batterieeinheit und die zweite Batterieeinheit in der jeweilig entsprechenden Ladesäule untergebracht sein oder in der Ladestation.

Die Kapazität des Pufferspeichers kann typischerweise so ausgelegt werden, dass mindestens zwei Elektrofahrzeuge, z.B. elektrisch betriebene PKWs, mit Energie versorgt bzw. aufgeladen werden können. Gemäß einigen Ausführungsformen kann die Kapazität des Pufferspeichers so groß gewählt werden, dass er eine Anzahl von Elektrofahrzeugen mit Energie versorgen kann, die beispielsweise mindestens der Anzahl der Ladesäulen entspricht. Mit einer derartig groß gewählten Kapazität des Pufferspeichers können die Ladesäulen zuverlässig mit Energie versorgt werden, ohne in der konkreten Ladesituation des Fahrzeugs auf die Energiebereitstellung aus dem Netzanschluss angewiesen zu sein. Der Pufferspeicher kann kontinuierlich durch den Netzanschluss geladen werden, und zugleich die Elektrofahrzeuge mit Energie versorgen. Hierbei kann der Ladestrom aus dem Netzanschluss zum Pufferspeicher geringer sein als der Ladestrom, der aus dem Pufferspeicher an die Elektrofahrzeuge fließt. Damit erfüllt der Pufferspeicher die Funktion eines Puffers, welcher Ladung zwischenpuffert und sie bei Bedarf im größeren Umfang, als es der existierende Netzanschluss erlaubt, zur Verfügung stellt.

Beschrieben wird ferner ein Verfahren zum Laden eines oder mehrerer Elektrofahrzeuge durch ein Ladesystem mit einer Ladestation, einer ersten Ladesäule, einem Pufferspeicher zum Speichern von Energie, einem Netzanschluss zum Bereitstellen von Energie an die Ladestation und einer Schaltvorrichtung, wobei das Verfahren ein Schalten der Schaltvorrichtung des Ladesystems aufweist, um den Energiefluss aus dem Pufferspeicher und/oder dem Netzanschluss zu der mindestens ersten Ladesäule zu leiten. In einem Beispiel kann das Ladesystem ein Ladesystem gemäß hierin geschriebenen Ausführungsformen sein.

In weiteren Beispielen des Verfahrens zum Laden eines oder mehrerer Elektrofahrzeuge kann die zugrunde liegende Ladestation mindestens eine zweite Ladesäule aufweisen und das Verfahren kann ferner ein Schalten der Schaltvorrichtung des Ladesystems aufweisen, um den Energiefluss aus dem Pufferspeicher und/oder aus dem Netzanschluss der Ladestation zwischen der ersten Ladesäule und der zweiten Ladesäule aufzuteilen oder den Energiefluss zu einer der beiden Ladesäulen zu leiten. Die Schaltvorrichtung kann auch so ausgelegt sein, dass ein gleichzeitiges Laden einer Batterie des Ladesystems und des an der Ladesäule angeschlossenen Elektrofahrzeugs möglich ist. Dieses kann unter anderem durch die Verwendung von mindestens zwei Gleichspannungswandlern pro Ladesäule erreicht werden. Das erfindungsgemäße Verfahren kann auch ein Dazuschalten des Pufferspeichers beim Laden mindestens eines Elektrofahrzeugs aufweisen, während die Hauptladelast vom Netzanschluss getragen wird, beispielsweise wenn die Netzleistung zu gering ist, um die an die Ladestation(en) angeschlossenen Elektrofahrzeuge mit maximalem Ladestrom zu laden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine schematische Zeichnung eines Ladesystems mit zwei Ladesäulen gemäß hierin beschriebenen Ausführungsformen.
Figur 2 zeigt eine schematische Zeichnung einer Schaltvorrichtung eines Ladesystems mit zwei Ladesäulen gemäß hierin beschriebenen Ausführungsformen.
Figur 3 zeigt ein schematisches Diagramm eines Ladesystems mit zwei Ladesäulen gemäß hierin beschriebenen Ausführungsformen.

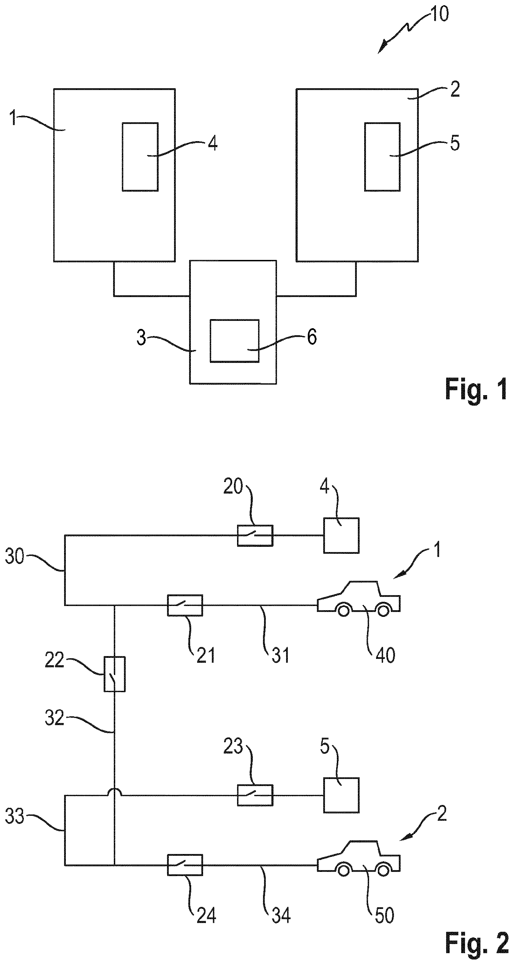

Figur 1 zeigt ein Ladesystem 10 gemäß hierin beschriebenen Ausführungsformen. Das Ladesystem 10 kann zum Beispiel ein Ladesystem zum Laden von Elektroautos sein, insbesondere von elektrisch betriebenen PKWs. Das Ladesystem 10 umfasst typischerweise zwei Ladesäulen 1 und 2. Jede der Ladesäulen 1, 2 kann einen oder mehrere Ladestecker aufweisen, mit denen jeweils ein Elektrofahrzeug zum Aufladen verbunden werden kann. Die Anzahl der Ladesäulen eines Ladesystems gemäß hierin beschriebenen Ausführungsformen ist nicht auf zwei beschränkt. Zum Beispiel kann das Ladesystem mehr als zwei Ladesäulen aufweisen. Insbesondere kann das erfindungsgemäße Ladesystem 10 auch nur eine Ladesäule 1 aufweisen.

Gemäß hierin beschriebenen Ausführungsformen weist das Ladesystem einen Pufferspeicher auf, der in dem in Figur 1 gezeigten Beispiel in Form zweier Batterien 4 und 5 dargestellt ist. In dem in Figur 1 gezeigten Beispiel ist die erste Batterie 4 des Pufferspeichers in der ersten Ladesäule 1 angebracht und die zweite Batterie 5 des Pufferspeichers in der zweiten Ladesäule 2. Gemäß einigen hierin beschriebenen Ausführungsformen können die beiden Batterien 4 und 5 des Pufferspeichers im Wesentlichen gleich groß sein. Die Ladesäulen 1 und 2 können durch eine Ladestation 3 miteinander galvanisch getrennt verbunden sein. In der gezeigten Ausführungsform weist die Ladestation 3 die Leistungselektronik 6 auf und kann ferner beispielsweise eine Kühlung, Prozessoren, Messvorrichtungen, Schaltvorrichtungen und weitere Elemente aufweisen. In Figur 1 sind der Einfachheit halber die beiden Ladesäulen 1 und 2 schematisch durch die gemeinsame Leistungselektronik 6 galvanisch getrennt verbunden, welche zentral in der Ladestation 3 angeordnet ist. Die Ladestation 3 kann ferner einen Netzanschluss aufweisen (nicht explizit gezeigt), welcher mit der Leistungselektronik 6 gekoppelt ist. In der Grundform des erfindungsgemäßen Ladesystems 10 kann dieses nur die Ladestation 3 samt Leistungselektronik 6 aufweisen, die mit der ersten Ladesäule 1 gekoppelt ist.

Obwohl die Figur 1 die Batterien 4 und 5 des Pufferspeichers des Ladesystems in den Ladesäulen 1 und 2 zeigt, sind auch andere Ausführungsformen der Anordnung möglich. Zum Beispiel kann das erfindungsgemäße System aus zwei Einheiten bestehen: Einer Ladestation mit dem Pufferspeicher und der Leistungselektronik (und weiteren Elementen, wie oben bereits beispielhaft erwähnt) zum einen und der eigentlichen Ladesäule mit den Ladesteckern zum Elektrofahrzeug zum anderen. Dabei kann die Ladestation getrennt von den Ladesäulen angeordnet sein, zum Beispiel in einem Abstand von einigen zehn bis zu einigen hundert Metern Entfernung.

Das erfindungsgemäße Ladesystem 10 kann, obwohl der Einfachheit halber nicht in den Figuren gezeigt, etliche weitere Elemente aufweisen, die für den Betrieb eines Ladesystems zum Laden eines Elektrofahrzeugs benötigt werden. Zum Beispiel kann das Ladesystem weitere Elemente der Leistungselektronik, Anschlüsse, Stecker, Kabel, Erdungen, Kontrollsysteme, Prozessoren, Messvorrichtungen, usw. aufweisen.

Der Pufferspeicher gemäß hierin beschriebenen Ausführungsformen kann eine Batterie, insbesondere eine wiederaufladbare Batterie sein. In einigen Ausführungsformen, wie sie beispielhaft in den Figuren gezeigt sind, kann der Pufferspeicher auf zwei Batterien aufgeteilt sein oder auf eine Anzahl Batterien aufgeteilt sein, die der Anzahl der Ladesäulen des erfindungsgemäßen Ladesystems entspricht. Insbesondere kann die Aufteilung der Batterie mit den einzelnen Ladesäulen assoziiert sein.

Der integrierte Pufferspeicher kann mit Kapazitäten im Bereich von ca. 50 kWh bis ca. 500 kWh derart ausgelegt sein, dass ein Netzanschluss zur Versorgung mit Energie überflüssig wird, zumindest während des Ladens der Elektrofahrzeuge. Insbesondere ist der Pufferspeicher ausgelegt, ein oder mehrere Elektrofahrzeuge, insbesondere PKWs, zu laden. Die Kapazität des Pufferspeichers kann so dimensioniert werden, dass die gleichzeitig geladenen Elektrofahrzeuge nur durch die Energie aus dem Pufferspeicher und ohne Energiefluss aus dem Netzanschluss geladen werden können. Dadurch ist das Ladesystem nicht von einem Netzanschluss, oder einem Netzanschluss einer bestimmten Größe abhängig. Zusätzlich oder alternativ zu einem derartigen Pufferspeicher kann das Ladesystem mit einem Stromnetz verbindbar sein, insbesondere mit einem Stromnetz mit kleiner Netzleistung. Damit kann trotz geringer Netzleistung eine große und schnelle Ladeleistung des Elektrofahrzeugs gewährleistet werden.

Figur 2 zeigt eine Schaltvorrichtung eines Ladesystems gemäß Ausführungsformen der Erfindung. Gezeigt sind in dem Beispiel der Figur 2 die erste Batterie 4 der ersten Ladesäule 1, mit der ein zu ladendes erstes Elektrofahrzeug 40 verbunden ist. Weiterhin zeigt die Figur 2 eine zweite Batterie 5 der zweiten Ladesäule 2 mit einem damit verbundenen zweiten Elektrofahrzeug 50. Die Schaltvorrichtung des Ladesystems weist mehrere Schalter, nämlich einen ersten Schalter 20, einen zweiten Schalter 21, einen dritten Schalter 22, einen vierten Schalter 23 und einen fünften Schalter 24 auf. Das erste Elektrofahrzeug 40, das mit der ersten Ladesäule 1 verbunden ist, kann über den ersten Schalter 20 und den zweiten Schalter 21und über die erste Verbindung 30 und die zweite Verbindung 31 mit der ersten Batterie 4 zum Laden verbunden werden. Das zweite Elektrofahrzeug 50 kann über den vierten Schalter 23 und den fünften Schalter 24 und über die vierte Verbindung 33 und die fünfte Verbindung 34 mit der zweiten Batterie 5 der zweiten Ladesäule 2 verbunden werden. Dabei muss der Strom nicht zwischen den Ladepunkten aufgeteilt werden, sondern kann bei Bedarf an jedem Ladepunkt in voller Höhe bereitgestellt werden. Sowohl dem ersten Elektrofahrzeug 40 als auch dem zweiten Elektrofahrzeug 50 steht somit die maximale Energie aus den Batterien zum Laden zur Verfügung.

Die in Figur 2 gezeigte Schaltvorrichtung, welche im Allgemeinen zumindest einem Teil der Leistungselektronik entsprechen kann, weist außerdem einen dritten Schalter 22 und eine dritte Verbindung 32 auf. Die dritte Verbindung 32 verbindet gemäß hierin beschriebenen Ausführungsformen die erste Verbindung 30 der ersten Ladesäule 1 mit der vierten Verbindung 33 der zweiten Ladesäule 2. Der dritte Schalter 22 kann diese Verbindung herstellen oder trennen. Somit kann zum Beispiel das erste Elektrofahrzeug 40, das mit der ersten Ladesäule 1 verbunden ist, auch über die dritte Verbindung 32 und den geschlossenen dritten Schalter 22 durch die Batterie 5 geladen werden. In einem Beispiel kann das erste Elektrofahrzeug 40 auch über beide Batterien, die erste Batterie 4 und die zweite Batterie 5 geladen werden. In einem anderen Beispiel kann das zweite Elektrofahrzeug 50 über die fünfte Verbindung 34, die vierte Verbindung 33, die dritte Verbindung 32 und die erste Verbindung 30 mit der Batterie 4 der ersten Ladesäule 1 verbunden werden. Auch das zweite Elektrofahrzeug 50 kann bei entsprechender Schalterstellung mit beiden Batterien 4 und 5 der beiden Ladesäulen verbunden sein.

Der erste Schalter 20 und die erste Batterie 4 können, wie in Figur 1 gezeigt, in der ersten Ladesäule 1 angeordnet sein oder alternativ auch zentral in der Ladestation angeordnet sein. Analog verhält es sich mit der Anordnung des vierten Schalters 23 und der zweiten Batterie 5 bezüglich der zweiten Ladestation 2. Auch die Schalter 21 und 24 können in der Ladestation oder der Ladesäule angeordnet sein. Die Schaltvorrichtung, wie oben definiert, kann zentral in der Ladestation angeordnet sein oder auf die Ladestation und die Ladesäulen 1, 2 verteilt angeordnet sein. Üblicherweise kann der dritte Schalter 22 in der Ladestation angeordnet sein.

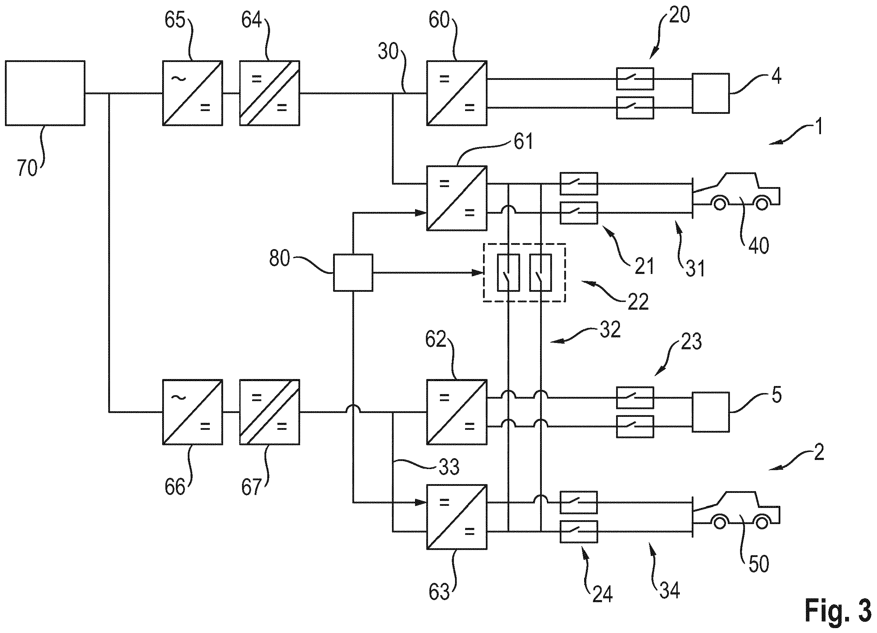

Figur 3 zeigt ein Diagramm des Systems gemäß hierin beschriebenen Ausführungsformen. Das Diagramm der Figur 3 umfasst im rechten Teil die Schaltvorrichtung, wie sie vereinfacht in der Figur 2 gezeigt und beschrieben wurde. Dabei ist die erste Ladesäule 1 mit der ersten Batterie 4 und dem ersten Elektrofahrzeug 40 und die zweite Ladesäule 2 mit der zweiten Batterie 5 und dem zweiten Elektrofahrzeug 50 zu sehen. Wie oben im Detail beschrieben, sind die Batterie- und Strompfade der Ladesäulen 1 und 2 durch die erste Verbindung 30, die zweite Verbindung 31, die dritte Verbindung 32, die vierte Verbindung 33, und die fünfte Verbindung 34 und den ersten Schalter 20, den zweiten Schalter 21, den dritten Schalter 22, den vierten Schalter 23, und den fünften Schalter 24 miteinander verbindbar. Die Doppelleitungen, welche jeweils vom ersten DC/DC-Steller 60 zur ersten Batterie 4, vom zweiten DC/DC-Steller 61 zum ersten Elektrofahrzeug 40, vom dritten DC/DC-Steller 62 zur zweiten Batterie 5 und vom vierten DC/DC-Steller 63 zum zweiten Elektrofahrzeug 50 verlaufen, sind repräsentativ für Pluspol und Minuspol dargestellt worden.

Die in Fig. 3 dargestellte beispielhafte Schalttopologie kann als vorteilhaft angesehen werden, da die DC/DC-Steller der Ladestationen (erste Ladesäule 1: erster und zweiter DC/DC-Steller 60, 61; zweite Ladesäule 2: dritter und vierter DC/DC-Steller 62, 63) für Leistungen ausgelegt werden können, die sich am Ladevorgang eines Elektrofahrzeugs 40, 50 orientieren und damit vergleichsweise kostengünstiger und kompakter sind, da sie nur etwas mehr als die halbe mögliche Leistung eines Ladepunktes bereitstellen. Beim Zusammenschalten der ersten und zweiten Batterie 4, 5 über den dritten Schalter 22 zwecks Laden eines der beiden Elektrofahrzeuge 40, 50 wird die Spannung zunächst an jeder Ladestation 1, 2 unabhängig voneinander durch die dazugehörigen DC/DC-Steller gewandelt. Erst am Ende, d.h. zwischen dem DC/DC-Steller 61 und dem Schalter 21 und analog zwischen dem DC/DC-Steller 63 und dem Schalter 24, erfolgt die Zusammenführung der Ladeströme, so dass zu keinem Zeitpunkt ein Ladestrom durch die DC/DC-Steller 60, 61, 62, 63 der ersten und zweiten Ladestation 1, 2 fließt, welcher der Summe des Ladestroms aus der ersten Batterie 4 und zweiten Batterie 5 entspricht.

Die Figur 3 zeigt außerdem einen Netzanschluss 70 und Teile der Leistungselektronik des erfindungsgemäßen Ladesystems. Insbesondere sind in der Figur 3 ein erster Gleichrichter 65 und ein zweiter Gleichrichter 66 sowie ein erster Gleichspannungswandler 64 und ein zweiter Gleichspannungswandler 67 gezeigt. Damit kann der Netzanschluss 70 zum Laden des Pufferspeichers, insbesondere zum Laden der Batterien 4 und 5 verwendet werden oder aber direkt zum Laden des ersten Elektrofahrzeugs 40 über den zweiten DC/DC-Steller 61 und/oder zum Laden des zweiten Elektrofahrzeugs 50 über den vierten DC/DC-Steller 63 benutzt werden. Die Energie jeder der in Figur 3 beispielhaft gezeigten Batterien 4 und 5 geht durch einen ersten DC/DC-Steller 60 und einen zweiten DC/DC-Steller 61, bzw. einen dritten DC/DC-Steller 62 und einen vierten DC/DC-Steller 63, also jeweils zwei DC/DC-Steller, bis die Batteriespannung auf die gewünschte Ausgangsspannung des ersten Elektrofahrzeugs 40, bzw. des zweiten Elektrofahrzeugs 50 gebracht wurde. Die Leistungselektronik bedient dabei beide Ladesäulen 1 und 2 und kann, in manchen Ausführungsformen, örtlich getrennt von diesen vorgesehen sein (wie oben näher erläutert). In der Figur 3 ist ebenfalls eine Kontrolleinheit 80 für die Spannungswandler vorgesehen, die dafür sorgt, dass die Zusammenschaltung problemlos funktioniert, indem sie beispielsweise die Ladeströme überwacht. Die Verwendung von jeweils zwei DC/DC-Stellern pro Ladestation 1, 2 ermöglicht zudem die Verwendung vergleichsweise kleinerer und kostengünstigerer Gleichspannungswandler, da der Spannungshub beim Laden der Batterien 4, 5 mittels des Netzanschlusses 70 und beim Laden der Elektrofahrzeuge 40, 50 mittels der Batterien 4, 5 nicht durch einen einzigen Gleichspannungswandler bereitgestellt werden muss.

Wie in der Figur 3 gesehen werden kann, wird die durch die gemeinsame Leistungselektronik übertragene Energie bereits als Gleichstrom und Gleichspannung an die jeweiligen Ladesäulen 1 und 2 übertragen.

Obwohl in der vereinfachten Darstellung der Figur 3 nicht gezeigt, kann das Ladesystem gemäß Ausführungsformen der Erfindung weitere Elemente aufweisen. Zum Beispiel kann das Ladesystem Isolationswächter, Erdungsvorrichtungen, weitere Schaltungen usw. aufweisen.

Durch das erfindungsgemäße Ladesystem ist es möglich, ein System zum Schnellladen von Elektrofahrzeugen mit hohen Gleichspannungen und Strömen zur Verfügung zu stellen.

Weiterhin wird ein Verfahren zum Versorgen mit Energie eines Ladesystems zum Laden eines oder mehrerer Elektrofahrzeuge bereitgestellt. Dabei kann das Ladesystem insbesondere ein Ladesystem sein, wie es hierin gemäß Ausführungsformen beschrieben worden ist. Das Verfahren umfasst das Bereitstellen eines Pufferspeichers, der mit der ersten Ladesäule und mit der zweiten Ladesäule koppelbar ist, wobei der Pufferspeicher typischerweise in Form einer mit den beiden Ladesäulen assoziierten Batterie realisiert werden kann. Durch die erfindungsgemäße Schaltvorrichtung, mit der die beiden Ladesäulen galvanisch getrennt verbunden sind, können die Batterien des Pufferspeichers zusammengeschlossen werden. Gemäß hierin beschriebenen Ausführungsformen kann eine Kontrollvorrichtung das Öffnen oder Schließen von Verbindungen mittels Schaltvorrichtung kontrollieren. Zum Beispiel kann die Kontrollvorrichtung in Abhängigkeit der an die Ladesäulen angeschlossenen Fahrzeuge bestimmen, wie die Energie des Pufferspeichers auf die Ladesäulen aufgeteilt wird, bzw. welche Verbindungen zu den Batterien des Pufferspeichers geöffnet oder geschlossen werden.

Das Verfahren kann weitere Schritte umfassen, wie zum Beispiel das Erfassen etlicher Parameter. Diese Parameter können die Anzahl angeschlossener Fahrzeuge, den Ladezustand der angeschlossenen Fahrzeuge, den Ladezustand des Pufferspeichers, die Dauer der Verbindung zum Fahrzeug und dergleichen umfassen. In einer Ausführungsform kann das Erfassen der Parameter, das Speichern der Parameter, das Berechnen der Konsequenzen, das Optimieren der einzelnen Ladevorgänge, das entsprechende Steuersignalgenerieren usw. von einer Prozessoreinheit durchgeführt werden.

Außerdem kann das Bereitstellen des Pufferspeichers das Bereitstellen mehrerer, der Anzahl an Ladesäulen entsprechender Batterien und das Bereitstellen einer entsprechenden Schaltung umfassen, wie sie zum Beispiel in Figur 2 näher erläutert wurde.

## Patentansprüche

1. Ladesystem (10) zum Laden von Elektrofahrzeugen, umfassend:
eine Ladestation;
eine erste Ladesäule (1), die einen oder mehrere Ladestecker aufweist; und die an der Ladestation angeschlossen ist;
eine zweite Ladesäule (2), die einen oder mehrere Ladestecker aufweist; und die an der Ladestation angeschlossen ist;
einen Pufferspeicher (4; 5) zum Speichern von Energie;
einen Netzanschluss (70) zum Bereitstellen von Energie an die Ladestation; und
eine Schaltvorrichtung (20-24), welche eingerichtet ist, den Energiefluss aus dem Pufferspeicher (4; 5) und dem Netzanschluss (70) auf die beiden Ladesäulen (1; 2) zu verteilen oder ihn zu einer der beiden Ladesäulen (1; 2) zu leiten; **dadurch gekennzeichnet, dass** die Schaltvorrichtung (20-24) derart eingerichtet ist, dass die maximale Energie des Ladesystems (10) an je einer der beiden Ladesäulen (1; 2) bereitstellbar ist und
wobei die beiden Ladesäulen (1; 2) durch jeweils eine Leistungselektronik bedienbar sind,
deren Leistungen ebenfalls über die Schaltvorrichtung zusammenschaltbar sind.

2. Das Ladesystem nach Anspruch 1, wobei der Pufferspeicher (4; 5) eine Batterie aufweist und wobei der Pufferspeicher (4; 5) bevorzugt zwei Batterieeinheiten aufweist, wovon je eine mit jeweils einer Ladesäule (1; 2) assoziiert ist.

3. Das Ladesystem nach Anspruch 2, wobei die Batterieeinheiten des Pufferspeichers (4; 5) in den Ladesäulen (1; 2) des Ladesystems (10) angeordnet sind.

4. Das Ladesystem nach einem der vorangehenden Ansprüche, wobei der Pufferspeicher eine erste Batterie (4) für die erste Ladesäule (1) und eine zweite Batterie (5) für die zweite Ladesäule (2) aufweist und wobei die erste Batterie (4) mit der zweiten Ladesäule (2) und die zweite Batterie (5) mit der ersten Ladesäule (1) koppelbar ist.

5. Das Ladesystem nach einem der vorangehenden Ansprüche, wobei die Kapazität des Pufferspeichers (4; 5) derart dimensioniert ist, dass mindestens zwei Elektrofahrzeuge (40; 50) mit Energie versorgt werden können.

## Claims

1. A charging system (10) for charging electric vehicles, comprising:
a charging station;
a first charging column (1) comprising one or more charging plugs;
and connected to the charging station;
a second charging column (2) comprising one or more charging plugs;
and connected to the charging station;
a buffer storage unit (4; 5) for storing power;
a mains connection (70) for supplying power to the charging station; and a switching apparatus (20-24) configured so as to distribute the power flow from the buffer storage unit (4; 5) and the mains connection (70) onto the two charging columns (1; 2)
or direct it towards one of the two charging columns (1; 2);
**characterised in that** the switching apparatus (20-24) is configured such that the maximum energy of the charging system (10) can be provided at each of the two charging columns (1; 2), and
wherein the two charging columns (1; 2) in each case can be operated by a power electronics, whose power can also be switched, together via the switching apparatus.

2. The charging system according to claim 1, wherein the buffer storage unit (4; 5) comprises a battery and wherein the buffer storage unit (4; 5) preferably comprises two battery units, one of which is respectively associated with a charging column (1; 2).

3. The charging system according to claim 2, wherein the battery units of the buffer storage unit (4; 5) are arranged in the charging columns (1; 2) of the charging system (10).

4. The charging system according to one of the preceding claims, wherein the buffer storage unit comprises a first battery (4) for the first charging column (1) and a second battery (5) for the second charging column (2), and wherein the first battery (4) can be coupled to the second charging column (2) and the second battery (5) can be coupled to the first charging column (1).

5. The charging system according to one of the preceding claims, wherein the capacity of the buffer storage (4; 5) is dimensioned such that at least two electric vehicles (40; 50) can be powered.

## Revendications

1. Système de charge (10) pour la charge de véhicules électriques, comprenant :
une station de charge ;
une première borne de charge (1) qui présente une ou plusieurs prises de charge
et raccordée à la station de charge ;
une deuxième borne de charge (2) qui présente une ou plusieurs prises de charge
et raccordée à la station de charge ;
un accumulateur tampon (4 ; 5) destiné à stocker de l'énergie ;
un raccordement au réseau (70) pour la fourniture d'énergie à la station de charge ; et un dispositif de commutation (20-24) conçu pour répartir le flux d'énergie issu de l'accumulateur tampon (4 ; 5) et du raccordement au réseau (70) entre les deux bornes de charge (1 ; 2)
ou pour l'apporter à une seule des deux bornes de charge (1 ; 2) ;
**caractérisé en ce que** le dispositif de commutation (20-24) est conçu de telle manière que l'énergie maximale du système de charge (10) est disponible sur l'une ou l'autre des deux bornes de charge (1 ; 2) ;
lesdites deux bornes de charge (1 ; 2) pouvant être activées chacune par le biais d'une électronique de puissance dont les puissances peuvent également être interconnectées par le biais du dispositif de commutation.

2. Système de charge selon la revendication 1, dans lequel l'accumulateur tampon (4 ; 5) présente une batterie et dans lequel l'accumulateur tampon (4 ; 5) présente de préférence deux unités de batterie, chacune associée à une borne de charge (1 ; 2) respective.

3. Système de charge selon la revendication 2, dans lequel les unités de batterie de l'accumulateur tampon (4 ; 5) sont agencées dans les bornes de charge (1 ; 2) du système de charge (10).

4. Système de charge selon l'une des revendications précédentes, dans lequel l'accumulateur-tampon présente une première batterie (4) pour la première borne de charge (1) et une deuxième batterie (5) pour la deuxième borne de charge (2), et dans lequel la première batterie (4) peut être couplée à la deuxième borne de charge (2) et la deuxième batterie (5) à la première borne de charge (1).

5. Système de charge selon l'une des revendications précédentes, dans lequel la capacité de l'accumulateur tampon (4 ; 5) est dimensionnée de manière qu'il puisse alimenter au moins deux véhicules électriques (40 ; 50).
